# EUROPÄISCHE PATENTSCHRIFT

(11) **EP 0 742 691 B1**
(45) Veröffentlichungstag und Bekanntmachung des Hinweises auf die Patenterteilung: **23.09.1998**
(21) Anmeldenummer: 95911287.1
(22) Anmeldetag: 03.03.1995
(51) Int. Cl.: A47J 31/06

(54) **TOPFFÖRMIGER DAUERFILTEREINSATZ**
POT-SHAPED DURABLE FILTER INSERT
CARTOUCHE FILTRANTE DURABLE EN FORME DE POT

(30) Priorität: 03.03.1994 DE 9403615 U; 19.07.1994 DE 4425494
(43) Veröffentlichungstag der Anmeldung: 20.11.1996
(73) Patentinhaber: MAXS AG, CH-6072 Sachseln (CH)
(72) Erfinder: GASSER, Ruedi, CH-6077 Bürglen (CH); STUMVOLL, Ernst, CH-6060 Sarnen (CH)
(74) Vertreter: Grünecker, Kinkeldey, Stockmair & Schwanhäusser Anwaltssozietät
(86) Internationale Anmeldenummer: EP9500788
(87) Internationale Veröffentlichungsnummer: WO9523543

(56) Entgegenhaltungen:
- CH-A- 434 629
- DE-A- 3 035 157
- DE-A- 4 135 660
- FR-A- 2 143 951
- FR-A- 2 158 306
- FR-A- 2 387 623
- FR-A- 2 417 963
- FR-A- 2 481 609
- FR-E- 72 949
- GB-A- L19 311
- US-A- 1 718 170

## Beschreibung

Die Erfindung bezieht sich auf einen topfförmigen Dauerfiltereinsatz zum Einsatz in einer Espressomaschine, mit einer im Wesentlichen den Topfboden formenden Filtergrundplatte, die von mehreren Filteröffnungen im wesentlichen in Strömungsrichtung des zu filternden Mediums durchbrochen ist und einen die Filtergrundplatte umgebenden Rahmen aufweist, und einer im wesentlichen am Rand der Filtergrundplatte angeordneten und sich zum Bilden eines Kaffeeaufnahmebereichs von dieser quer wegerstreckenden Topfwandung, wobei der Dauerfiltereinsatz mehrteilig ausgebildet ist, indem der untere Randbereich der Topfwandung im wesentlichen am äußeren Rand der Filterplatte befestigt ist.

Ein solcher Filtereinsatz ist aus der FR-A-23 87 628 bekannt.

Aus der US-A-1718170 ist eine Kaffeemaschine bekannt, die einen Filtertopf aufweist, dessen Boden von einer Filterplatte gebildet ist. Die Filterplatte wird von einem Rahmen umgeben, der an einem umlaufenden, am unteren Bereich des Filtertopfs angebrachten Kragen aufliegt und angebracht wird. Derartige Filtertöpfe sind zum Einsatz in einer Espressomaschine nicht geeignet, da bei einer Espressomaschine mit einem Dampfdurchsatz bei relativ hohen Drücken gearbeitet wird. Aus diesem Grunde würden sich bei einer Ausführungsform gemäß der US-A-1718170 sehr schnell die Anlagebereiche zwischen Topfwandung bzw. Kragen und Rahmen der Filterplatte Partikelreste des Kaffeepulvers festsetzen und bei nicht dauernder sachgerechter Reinigung zur Beeinträchtigung des Espressogeschmackes führen.

Es ist daher die Aufgabe der vorliegenden Erfindung, einen topfförmigen Dauerfiltereinsatz zum Einsatz in einer Espressomaschine bereitzustellen, der in seinem Aufbau verbessert ist.

Diese Aufgabe wird erfindungsgemäß dadurch gelöst, daß der untere Randbereich der Topfwandung und die Filtergrundplatte durch eine Spritzgußverbindung miteinander verbunden sind. Eine Spritzgußverbindung bietet den Vorteil, daß die Verbindungsstelle beliebig ausgebildet sein kann und offene Spalte vermieden werden. Weiterhin ist dann ein Rahmen durch Spritzgießen oder Druckgießen im wesentlichen um den äußeren Rand der Filtergrundplatte umlaufend angebracht. Der Rahmen verbindet dann die Filtergrundplatte und die Topfwandung miteinander. Dies garantiert eine dauerhafte und dichtende Positionierung der Filtergrundplatte. Weiterhin können sich Topfwandung und Filtergrundplatte durch einen einzigen Spritzgußvorgang oder Druckgußvorgang miteinander verbinden lassen.

Zwar sind aus der FR-A-2143951 und der FR-A-2417963 Dauerfilter zum Einsatz in eine Kaffeemaschine bekannt, deren Filterplatte mit einer Topfwandung durch Kunststoffspritzgießen verbunden ist, jedoch vermitteln diese Druckschriften nicht, warum eine solche Ausgestaltung für Espressomaschinen mit den ihr eigenen höheren Drücken verwendbar sein soll, da bei Espressomaschinen bis jetzt immer topfförmige Dauerfiltereinsätze verwendet wurden, die durch Tiefziehen von Blech hergestellt sind, deren Filteröffnung durch Einstanzen von Löchern in den Topfboden eingeformt werden. Eine ausreichende Stabilität ließ sich offensichtlich nach Fachmeinung nur so erreichen.

Besonders günstig ist es dabei, wenn der untere Randbereich mindestens ein Befestigungselement zur Aufnahme im Rahmen aufweist. Der Kunststoff umschließt dann das Befestigungselement bündig, wodurch die Topfwandung sehr gut von dem Rahmen festgehalten ist. Von Vorteil ist es hierbei, wenn das Befestigungselement in Form eines am unteren Randbereich der Topfwandung umlaufenden, zur Topfachse weisenden Kragen ausgebildet ist. Insbesondere bei Topfwandungen aus Metall, bevorzugt aus Edelstahl, kann ein solches Befestigungselement durch einen einfachen Tiefziehvorgang des unteren Randbereichs der Topfwandung erzeugt werden.

Die Topfwandung kann auch durch einen Metalldruckgußvorgang hergestellt sein und aus Metall, bevorzugt aus Aluminium oder Zink oder deren Legierungen, bestehen.

In einer weiteren bevorzugten Ausführungsform kann die Topfwandung aus Kunststoff bestehen. Dies kann insbesondere Vorteile bieten, wenn die Topfwandung und der Rahmen einteilig ausgebildet sind, wodurch sie in einem einzigen Spritzgußvorgang gemeinsam an die Filtergrundplatte anbringbar sind.

In einer weiteren Ausführungsform können die Filteröffnungen im Querschnitt eine dreieckige Form aufweisen. Betrachtet man das Strömungsbild durch eine solche dreieckige Öffnung, so kann festgestellt werden, daß Teilchen, die sich mehr in den Ecken der Öffnung befinden, gegen viel größere Reibungskräfte ankämpfen müssen, als Strömungsteilchen, die sich mehr im mittleren Bereich der Öffnung befinden. Dies wird bei einem Dreieck insbesondere dadurch verstärkt, daß die Strömungsteilchen in den Ecken von zwei Seiten in einem relativ spitzen Winkel eingeengt werden. Hierdurch entstehen bei einem Durchtritt Verwirbelungen, die zu einer besonders feinen und cremigen Schaumbildung führen, die eine bei Kennern sehr beliebte, exzellente Ausbildung der Crema auf einem Espresso herbeiführt. Ein gleichseitiges Dreieck ist hierbei eine bevorzugte Form.

In einer weiteren bevorzugten Ausführungsform könn.en die Filteröffnungen im Querschnitt eine Kreisform aufweisen, welche besonders einfach und formgenau hergestellt werden kann. Weitere bevorzugte Ausführungsformen sind die Linsen- und Tropfenform.

Des weiteren hat sich als besonders strömungsgünstig und damit zur Unterstützung des Ausbildens einer erwünschten Crema eine Ausbildung der Filteröffnungen herausgestellt, bei der sich die Öffnungen von der Oberseite der Filtergrundplatte in Strömungsrichtung zur Unterseite der Filtergrundplatte trichterförmig erweitern. Dabei ist es von Vorteil, wenn der Austrittswinkel der Seitenflächen der Filteröffnungen an der Unterseite der Filtergrundplatte mindestens 90° beträgt. Weiterhin ist es hierbei dann besonders günstig, wenn die Seitenflächen der Filteröffnungen bogenförmig gekrümmt ausgebildet sind und somit einen günstigen düsenartigen Aufbau erlangen. Als bevorzugte Abmaße, bei denen eine besonders feine Cremaausbildung erreicht werden kann, hat sich herausgestellt, wenn die Seitenlänge der Filteröffnungen an der Oberseite der Filtergrundplatten 50 bis 300 µm, bevorzugt ca. 200 µm beträgt. Um den Filteröffnungen eine hierzu vorteilhafte Länge zu geben, kann die Filtergrundplatte bevorzugt eine Dicke von 0,1 bis 1 mm, bevorzugt 0,4 mm aufweisen.

Bei der Verwendung von kreisförmigen Filteröffnungen kann der Durchmesser der Filteröffnungen an der Oberseite der Filtergrundplatte 100 bis 300 µm, bevorzugt 200 µm, betragen. Innerhalb dieses Durchmesserbereichs wird eine optimale Filterwirkung erreicht.

Das Verhältnis der Dicke der Filtergrundplatte zu dem Durchmesser bzw. der Seitenlänge der Filteröffnungen beträgt vorteilhaft 1,0 bis 3,0, bevorzugt 2,0. Unter die Begriffe Durchmesser und Kantenlänge fällt in diesem Zusammenhang auch jedes für die Größe einer Filteröffnung wesentliche charakteristische Maß einer jeden Filteröffnungsform.

Um einen optimalen Geschmack des Kaffees zu erreichen, hat sich bei den zur Zeit üblichen Betriebsdrücken der Kaffeezubereitungsmaschinen, insbesondere Espressomaschinen, herausgestellt, daß die Summe der Fläche der Filteröffnungen vorteilhafterweise 3 bis 12 mm², bevorzugt 7 mm², betragen soll.

Eine gleichmäßige und regelmäßige Verteilung der Filteröffnungen kann insbesondere dadurch erreicht werden, daß die Filteröffnungen reihen- und/oder spaltenförmig in der Filtergrundplatte zueinander angeordnet sind, wobei die Spitzen bei Verwendung von dreieckigen Filteröffnungen alternierend in einer Reihe und/oder Spalte in eine entgegengesetzte Richtung weisen können. Durch die gegengerichtete Anordnung der Filteröffnungen kann die gleichbleibende Feincremigkeit der Crema nochmals unterstrichen werden.

Damit eine bessere und dauerhaltbarere Anbringung des Rahmens an der Filtergrundplatte gewährleistet ist, ist im Randbereich der Filtergrundplatte mindestens eine Halteöffnung angeordnet, in die ein Haltebereich des Rahmens im wesentlichen paßgenau eingreift. Bei angespritztem Rahmen fließt dann während des Spritzgußvorganges Kunststoffmasse in die Halteöffnung, wodurch die Filtergrundplatte im Rahmen fest verankert wird. Bei einer weiteren Ausführungsform kann ebenfalls im inneren Randbereich des Kragens mindestens eine Verankerungsöffnung angeordnet sein, in die ein Verankerungsbereich des Rahmens im wesentlichen paßgenau eingreift. Dadurch ist auch eine genaue Anhaftung des Rahmens am Kragen der Topfwandung gegeben. Spritzgußtechnisch lassen sich der Kragen und die Filtergrundplatte insbesondere dann miteinander verbinden, wenn die Halteöffnungen der Filtergrundplatte und die Verankerungsöffnungen des Kragens im wesentlichen zueinander fluchtend angeordnet sind. Die Haltebereiche der Filtergrundplatte und die Verankerungsbereiche des Rahmens werden dann ebenfalls übereinander angeordnet und positionieren gemeinsam den Kragen und die Filtergrundplatte im wesentlichen paßgenau zueinander.

In einer weiteren Ausführungsform sind die Halteöffnungen der Filtergrundplatte im wesentlichen innerhalb des vom inneren Randbereich des Kragens umschlossenen Öffnungsbereichs angeordnet. Hierdurch kann die Filtergrundplatte kleiner ausgebildet werden, da sich Halteöffnungen und Verankerungsöffnungen nicht überdecken müssen. Hierdurch verringern sich die Kosten für die Filtergrundplatte. Eine im wesentlichen gleichmäßige Befestigung der Filtergrundplatte und des Kragens im Rahmen wird dadurch erreicht, daß die Halteöffnungen und/oder die Verankerungsöffnungen im wesentlichen in Form eines umlaufenden Lochkranzes entsprechend im Randbereich der Filtergrundplatte und/oder inneren Randbereich des Kragens eingebracht sind. Damit sich in einer weiteren Ausführungsform die Filtergrundplatte und der Kragen regelrecht im Rahmen verhaken können, sind die Halteöffnungen und/oder die Verankerungsöffnungen entsprechend zum Rand der Filtergrundplatte und/oder dem inneren Rand des Kragens hin zumindest teilweise offen ausgebildet.

Um einen im wesentlichen glatten Übergang vom Rahmen zur Topfwandung zu erreichen, kann der Rahmen im wesentlichen vollständig den Kragen umschließen und zumindest bereichsweise formschlüssig an der Topfwandung anliegen. Hinterschneidungen, die zu ungewolltem Ansammeln von Kaffeepulverresten führen könnten, werden durch diese Maßnahme vermieden. Des weiteren ist das Befestigungselement an der Topfwandung vollständig im Rahmen integriert und somit von außen nicht sichtbar, was ein ästhetisch schöneren Eindruck hinterläßt.

In einer weiteren bevorzugten Ausführungsform weist der Kragen eine umlaufende Stufe auf, in die der Rahmen zumindest teilweise im wesentlichen stramm eingepaßt ist.

Somit besteht auch die Möglichkeit, daß auch kompliziert aufgebaute Rahmen und Filterplatten vorab in einem Spritzgußvorgang miteinander verbunden werden und anschließend, ohne daß ein weiterer Spritzgußvorgang erforderlich wäre, in die Stufe am Kragen eingepreßt werden.

Um dem auf die Filtergrundplatte wirkenden Druck besser standhalten zu können, kann die Filtergrundplatte entgegen der Strömungsrichtung leicht konvex gewölbt im Rahmen angeordnet sein. Hierdurch wird der Filtergrundplatte eine höhere Stabilität verliehen. Des weiteren besteht darin der Vorteil, daß bei in eine umlaufende Stufe am Kragen eingepreßten Rahmen die Verbindung zwischen Rahmen und Kragen nochmals verstärkt wird, wenn die Filtergrundplatte mit Druckbeaufschlagt wird. Nicht zuletzt wird auch die Dichtungswirkung an der umlaufenden Stufe hierdurch erhöht.

Eine weitere Erhöhung der Dichtwirkung bei eingepreßten Rahmen kann dadurch erreicht werden, daß zumindest im vertikalen Bereich der Stufe mindestens eine umlaufende Dichtungsrille angeordnet ist, in die Umfangsbereiche des Rahmens im wesentlichen formschlüssig eingreifen. Durch das Einpressen des Rahmens und aufgrund der an den Oberflächen der Stufe und des Rahmens daraus resultierenden Kräfte, kann ein Teil des Rahmenmaterials in die Dichtungsrillen eindringen und dadurch für eine bessere Abdichtung sorgen.

Als besonders einfaches Verfahren zur Herstellung von feinporigen Dauerfiltereinsätzen hat sich herausgestellt, wenn die Filtergrundplatte aus Metall besteht und durch elektrolytische Metallabscheidung oder Stanzen oder Ätzen hergestellt wird. Entsprechend der geforderten Genauigkeit, kann dann das entsprechende Verfahren gewählt werden, durch das sich z. B. auch die dreieckigen Filteröffnungen mit relativ geringem Aufwand und mit ziemlich genauen Abmaßen herstellen lassen. Um der Filtergrundplatte eine besonders große Stabilität zu verleihen, kann auch eine Ausführungsform gewählt werden, bei der der Rahmen Verstärkungsstreben umfaßt, die sich entlang der Unterseite der Filtergrundplatte erstrecken und mit dieser in Berührung stehen. Der Rahmen kann auch Verstärkungsstreben umfassen, die sich entlang der Oberseite der Filtergrundplatte erstrecken und mit dieser in Berührung stehen. Wird der Dauerfiltereinsatz nun mit Druck beaufschlagt, stützen diese Verstärkungsstreben die relativ dünne Filtergrundplatte ab und verhindern deren übermäßiges Durchbiegen.

Als besonders zweckmäßige Form für solche Dauerfiltereinsätze, insbesondere zum Einsatz in einer Espressomaschine, haben sich kreisförmige Filtereinsätze herausgestellt, bei denen entsprechend die Filtergrundplatte und der Rahmen im wesentlichen eine Kreisform aufweisen. Bei bestimmten Formen von Dauerfiltereinsätzen kann es jedoch von Vorteil sein, wenn die Filtergrundplatte die Form eines Polygons, bevorzugt eines Sechsecks oder Achtecks, aufweist, weil dadurch eine bessere Flächenausnutzung erreichbar ist.

Im folgenden werden Ausführungsbeispiele der vorliegenden Erfindung anhand einer Zeichnung näher erläutert.

Es zeigt :
- Fig. 1: eine erste Ausführungsform der vorliegenden Erfindung im Halbschnitt,
- Fig. 2: eine erste Variante einer Verbindungsstelle zwischen Topfwandung und Filtergrundplatte,
- Fig. 2a: eine zweite Variante einer Verbindungsstelle zwischen Topfwandung und Filtergrundplatte,
- Fig. 2b: eine dritte Variante einer Verbindungsstelle zwischen Topfwandung und Filtergrundplatte,
- Fig. 3: eine erste Ausführungsform einer Filtergrundplatte in einer schematischen Drauf- und teilweise geschnittenen Seitenansicht,
- Fig. 3a: Draufsicht einer ersten Ausbildungsform einer Filteröffnung in vergrößerter Darstellung,
- Fig. 4: eine Topfwandung ähnlich der in Fig. 1 in einer Unteransicht und im Vollschnitt,
- Fig. 5: ein Anordnungsbeispiel einer ersten Variante von Halte- und Verankerungsöffnungen in vergrößerter Darstellung,
- Fig. 6: eine zweite Variante von Verankerungsöffnungen,
- Fig. 7: eine dritte Variante von Verankerungsöffnungen,
- Fig. 8a: eine Unteransicht einer Filtergrundplatten-Variante mit Rahmen,
- Fig. 8b: eine Unteransicht einer weiteren Filtergrundplatten-Variante mit Rahmen,
- Fig. 9: eine zweite Ausführungsform eines erfindungsgemäßen Dauerfiltereinsatzes,
- Fig. 10: eine Unteransicht einer dritten Ausführungsform eines erfindungsgemäßen Dauerfiltereinsatzes,
- Fig. 11: einen schematischen Halbschnitt einer vierten Ausführungsform der vorliegenden Erfindung,
- Fig. 11a: eine Ausführungsform eines unteren Endbereichs der Topfwandung in einer vergrößerten schematischen Darstellung und
- Fig. 12: eine vierte Variante einer Verbindungsstelle zwischen Topfwandung und Filtergrundplatte.

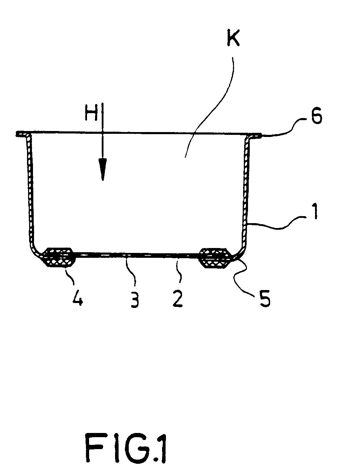

Gemäß der Ausführungsform nach Fig. 1, besteht der erfindungsgemäße topfförmige Dauerfiltereinsatz im wesentlichen aus einer Topfwandung 1 und einer im wesentlichen den Topfboden formenden Filtergrundplatte 2. Der erfindungsgemäße Dauerfiltereinsatz weist in den Figuren eine Kreisform auf, die jedoch nur als eine vorteilhafte Ausführungsform anzusehen ist. Die Filtergrundplatte 2 wird von einer Vielzahl von Filteröffnungen 3 durchdrungen. Die Filtergrundplatte 2 besteht bevorzugt aus einem Metall, wohingegen ein ringförmiger Rahmen 4, der die Filtergrundplatte 2 umfaßt, aus einem an die Filtergrundplatte 2 gespritzten Kunststoff besteht. Die Topfwandung 1 aus Fig. 1 ist aus Metall, bevorzugt einem Edelstahl, hergestellt und weist an ihrem unteren Randbereich einen umlaufenden, zur Topfachse weisenden Kragen 5 auf. Der Kragen 5 greift in den aus Kunststoff bestehenden Rahmen 4 ein und dient dort als Befestigungselement zur Befestigung an diesem.

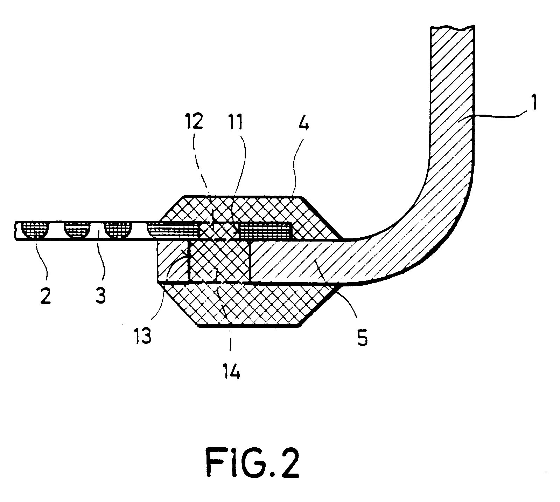

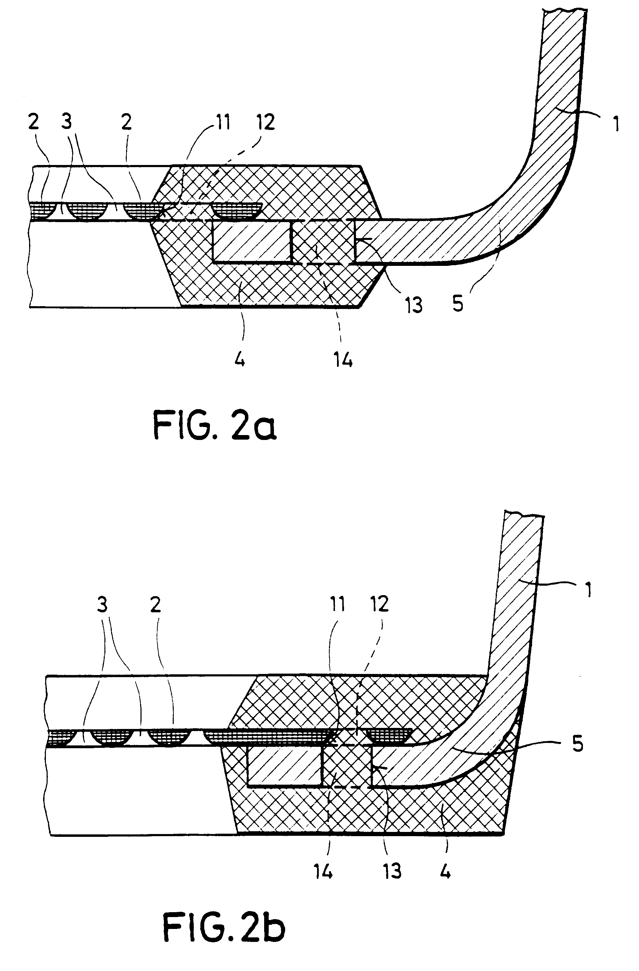

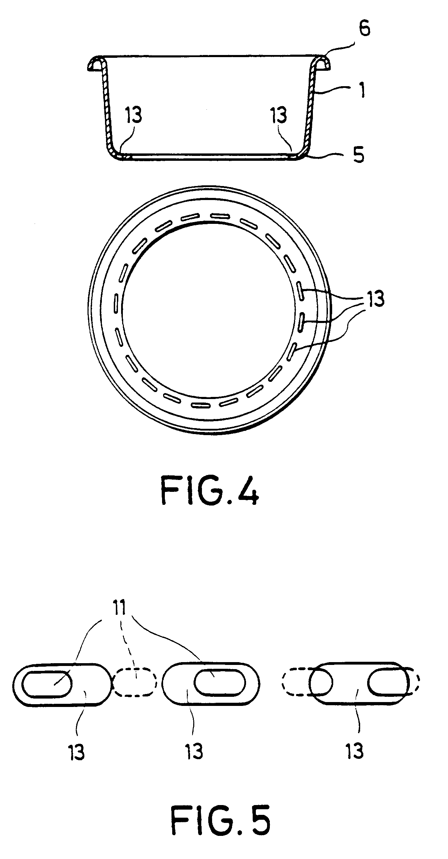

Insbesondere in den Figuren 2 bis 7 ist zu sehen, daß im Randbereich der Filtergrundplatte 2 Halteöffnungen 11 angeordnet sind, in die Haltebereiche 12 des Rahmens paßgenau eingreifen. Die Halteöffnungen 11 und Verankerungsöffnungen 13 sind in Form eines umlaufenden Lochkranzes entsprechend in den Randbereich der Filtergrundplatte 2 und des inneren Randbereichs des Kragens 5 eingebracht. In den Figuren 2, 2b und 5 ist zu erkennen, daß die Halteöffnungen 11 der Filtergrundplatte 2 und die Verankerungsöffnungen 13 des Kragens 5 zumindest teilweise im wesentlichen zueinander fluchtend angeordnet sind. Selbst wenn durch eine ungleiche Teilung nur bestimmte Halteöffnungen 11 und Verankerungsöffnungen 13 übereinanderliegen, reicht dies zu einer guten Befestigung der Filtergrundplatte 2 und des Kragens 5 im Rahmen 4 aus. Gemäß Fig. 2a ist es aber auch möglich, die Halteöffnungen 11 der Filtergrundplatte 2 im wesentlichen innerhalb des vom inneren Randbereich des Kragens 5 umschlossenen Öffnungsbereichs anzuordnen. Die Filtergrundplatte 2 liegt dann nur mit einem Teil des Randbereiches auf dem Kragen 5 auf und der Haltebereich 12 ist im wesentlichen angrenzend an dem freien Ende des Kragens 5 angeordnet. Dadurch, daß der Teilkreis des Lochkranzes der Halteöffnungen 11 kleiner ist als der Teilkreis des Lochkranzes der Verankerungsöffnungen 13, kann die Filtergrundplatte 2 mit verringertem Durchmesser hergestellt werden, wodurch sich Materialkosten einsparen lassen.

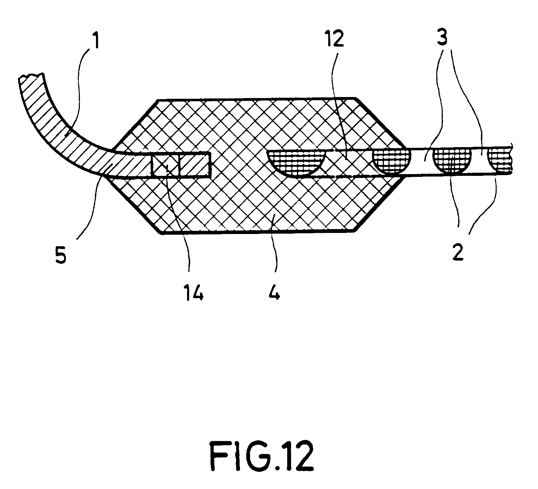

In der Fig. 12 ist eine weitere Variante einer Verbindungsstelle zwischen Topfwandung 1 und Filtergrundplatte 2 dargestellt. Der Kragen 5 und die Filtergrundplatte 2 sind innerhalb des Rahmens 4 auf gleicher Höhe angeordnet, so daß die Filtergrundplatte 2 in dem von dem inneren Randbereich des Kragens 5 umschlossenen Öffnungsbereich angeordnet ist. Der erforderliche Durchmesser der Filtergrundplatte 2 verringert sich durch diese Anordnung nochmals.

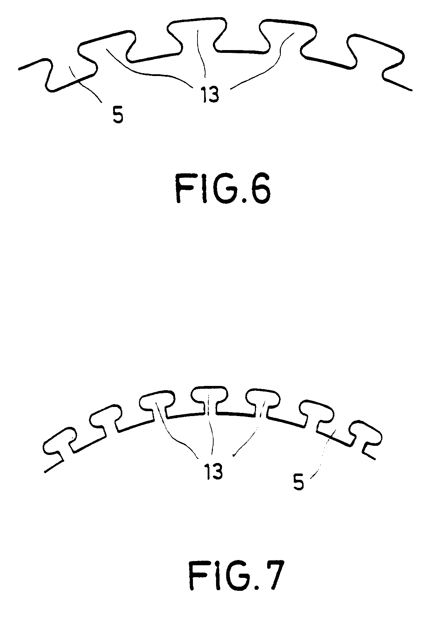

Figuren 6 und 7 zeigen weiterhin eine Variante von Verankerungsöffnungen 13, die aber auch ohne weiteres auf die Halteöffnungen 11 der Filtergrundplatte 2 übertragbar sind. Die Verankerungsöffnungen 13 sind entsprechend zum inneren Rand des Kragens 5 hin offen ausgebildet. Die Halteöffnungen 11 wären dann entsprechend zum Rand der Filtergrundplatte 2 hin offen ausgebildet. Mit dieser Ausgestaltung können sich Kragen 5 und Filtergrundplatte 2 noch besser im Kunststoffrahmen 4 verhaken. Eine bevorzugte Länge von Halte- und Verankerungsöffnungen 11, 13 kann 2 bis 4 mm, bei einem jeweiligen Abstand zum Rand und zueinander von 1,5 bis 2 mm, betragen. Die Breite des Schlitzes kann bevorzugt 1,5 bis 2 mm bemessen.

Bei diesen Ausgestaltungen ist es möglich, die Filtergrundplatte 2 und Topfwandung 1 mittels eines Spritzgußverfahrens, bei dem der Rahmen 4 angespritzt wird, miteinander zu verbinden. Die Topfwandung weist ebenfalls an ihrem oberen Randbereich einen umlaufenden, nach außen weisenden Flansch 6 auf, der zur besseren Halterung in der Kaffeezubereitungsmaschine dient.

Bei diesen Ausführungsbeispielen der vorliegenden Erfindung ist es darüber hinaus möglich, einen topfförmigen Dauerfiltereinsatz herzustellen, dessen Filtergrundplatte 2 beliebig ausgestaltet sein kann, sofern der Rahmen 4 eine Verbindung zwischen Topfwandung 1 und Filtergrundplatte 2 herstellen kann.

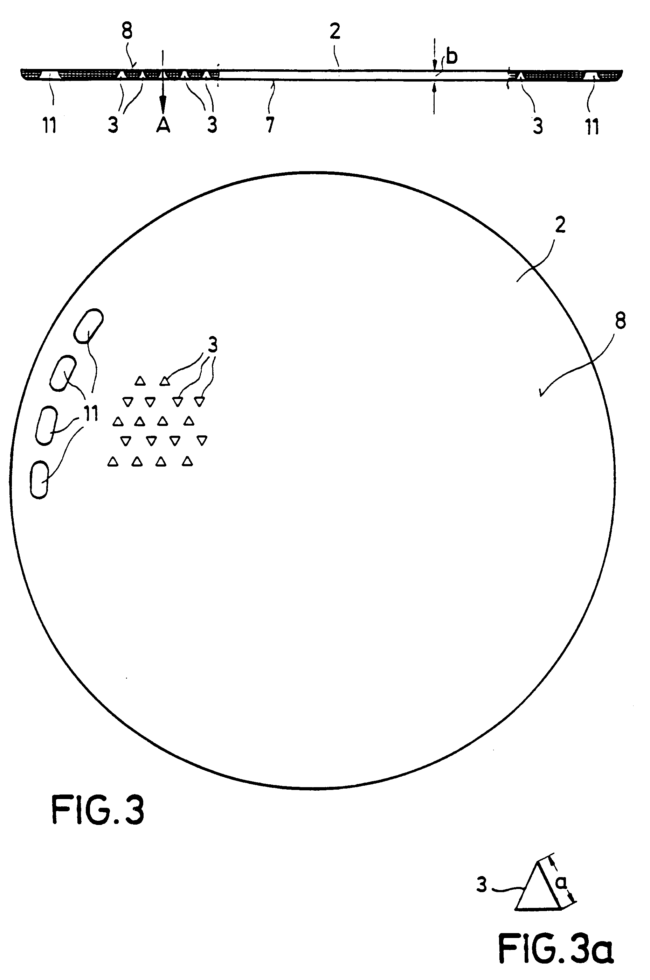

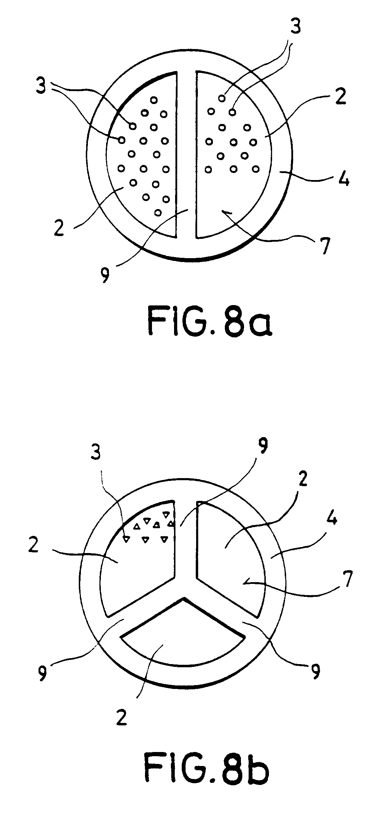

Im folgenden wird eine vorteilhafte Ausführungsform einer Filtergrundplatte 2 insbesondere anhand der Figuren 3, 3a, 8a und 8b näher erläutert. Die Filtergrundplatte 2 besteht bevorzugt aus einem Metall, wohingegen der Rahmen 4 aus einem an die Filtergrundplatte 2 gespritzten Kunststoff besteht. Der Rahmen 4 umfaßt weiterhin sich entlang der Unterseite 7 der Filtergrundplatte 2 erstreckende Verstärkungsstreben 9, die, wie in Fig. 8a gezeigt, so angeordnet sind, daß die Filtergrundplatte 2 zwei Durchtrittssektoren aufweist oder wie in Fig. 8b gezeigt, so angeordnet sind, daß die Filtergrundplatte 2 drei Durchtrittssektoren aufweist. Die Verstärkungsstreben 9 sind ebenfalls an die Filtergrundplatte 2 angespritzt, so daß sie sich teilweise in den von ihnen abgedeckten Filteröffnungen 3 verhaken. Möglich ist auch eine Anordnung von Verstärkungsstreben 9 entlang der Oberseite 8 der Filtergrundplatte 2. Des weiteren sorgen, wie bereits oben schon erwähnt, die Halteöffnungen 11 für eine positionsgenaue, verdreh- und verwindungssichere Befestigung der Filtergrundplatte 2 im Rahmen 4. Die Filteröffnungen 3 können im Querschnitt, wie in Fig. 8a gezeigt, eine Kreisform oder wie in Fig. 8b gezeigt, eine dreieckige Form aufweisen. Die Filteröffnungen 3 erweitern sich von der Oberseite 8 der Filtergrundplatte 2 in Strömungsrichtung A zur Unterseite 7 trichterförmig. Dabei sind die Seitenflächen 10 der Filteröffnungen 3 bogenförmig gekrümmt ausgeführt, so daß eine Art Diffusorform gebildet wird. Der Austrittswinkel der Seitenflächen 10 der Filteröffnungen 3 beträgt an der Unterseite 7 der Filtergrundplatte 2 mindestens 90°.

Wie insbesondere in Fig. 3 zu sehen ist, sind die Filteröffnungen 3 reihen- und spaltenförmig in der Filtergrundplatte 2 zueinander angeordnet. Bei dreieckigem Querschnitt weisen die Spitzen der dreieckigen Filteröffnungen 3 alternierend in einer Spalte in eine entgegengesetzte Richtung. Die Spitzen der Filteröffnungen 3 können auch in einer Reihe alternierend in entgegengesetzter Richtung weisen. Weitere Formen für die Filteröffnungen 3 sind die Linsen- und Tropfenform.

Die Filtergrundplatte 2 besteht aus Metall, das entweder elektrolytisch auf eine entsprechende Form abgeschieden wurde oder durch Stanzen oder Ätzen hergestellt wurde. Durch diese Verfahren wird eine extrem hohe Formgenauigkeit der Filtergrundplatte 2 und der Filteröffnungen 3 gewährleistet. Die Ecken der Filteröffnungen 3 sind insbesondere durch elektrolytisches Abscheiden und Ätzen besonders scharfkantig und spitz ausführbar. Bevorzugt haben die Filteröffnungen 3 die Form eines gleichseitigen Dreiecks, wobei die Seitenlänge a 50 bis 300 µm, bevorzugt ca. 200 µm, beträgt. Die Dicke b der Filtergrundplatte 2 beträgt 0,1 bis 1 mm, bevorzugt 0,4 mm. Bei kreisförmigen Filteröffnungen 3 mißt der Durchmesser an der Oberseite 8 der Filtergrundplatte 2 100 bis 300 µm, bevorzugt 200 µm. Das Verhältnis der Dicke b der Filtergrundplatte 2 zu dem Durchmesser bzw. der Seitenlänge a der Filteröffnungen 3 beträgt 1,0 bis 3,0, bevorzugt 2,0. Die Summe der Flächen der Filteröffnungen 3 der Filtergrundplatte beträgt 3 bis 12 mm², bevorzugt 7 mm².

Gemäß der Variante aus Fig. 2b kann der Rahmen 4 im wesentlichen vollständig den Kragen 5 umschließen und zumindest bereichsweise formschlüssig an der Topfwandung 1 anliegen. Hierdurch werden Hinterschneidungen vermieden, die zur Ansammlung von Kaffeepulver, insbesondere im Topfinneren, führen könnten. An der Außenwand entsteht dadurch weiterhin ein glatter Übergang zwischen Topfwandung 1 und Rahmen 4.

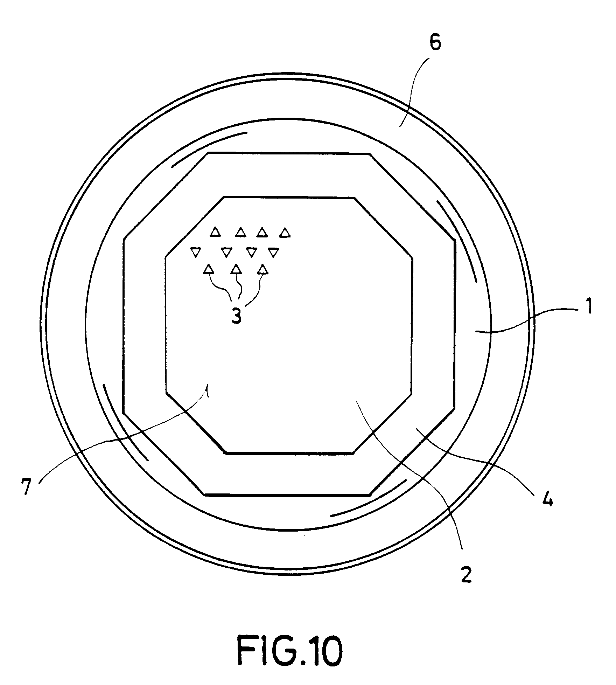

Die in den Figuren dargestellte Filtergrundplatten 2 sind lediglich als Ausführungsbeispiele zu verstehen, da erfindungsgemäß jegliche Arten von Filtergrundplattenanordnungen verwendbar sind. So ist z. B in Fig. 10 eine Filtergrundplatte 2 gezeigt, die eine achteckige Form aufweist. Der Rahmen 4 ist dann ebenfalls achteckig ausgebildet. Eine solche Ausgestaltung kann von Vorteil sein, wenn gegenüber einer kreisförmigen Filterplatte, deren Durchmesser der Breite der achteckigen Filtergrundplatte 2 entspricht, vergrößert werden soll. Die Fläche läßt sich hierdurch wesentlich steigern. Auch sämtliche anderen Polygonformen, wie z. B. Sechseck, sind möglich.

Die Topfwandung 1 kann durch einen Metalldruckgußvorgang hergestellt sein und aus Metall, bevorzugt aus Aluminium oder Zink oder deren Legierungen bestehen.

Im folgenden wird die Funktionsweise der in Fig. 1 gezeigten Ausführungsform des erfindungsgemäßen Dauerfiltereinsatzes kurz erläutert. Der topfförmige Dauerfiltereinsatz wird in die dafür vorgesehene Stelle einer Kaffeezubereitungsmaschine eingesetzt, wobei der Flansch 6 mit einer Auflagefläche der Maschine in Anlage kommt.

Das Kaffeepulver wird in den Kaffeeaufnahmebereich K eingefüllt, so daß es sich auf der Oberseite 8 der Filtergrundplatte 2 befindet. Nachdem Wasser auf die Solltemperatur gebracht worden ist, wird es durch die Kaffeepulverschicht und anschließend durch die Filtergrundplatte 2 gepreßt. Die Filteröffnungen 3 sind dabei so klein gewählt, daß keine störenden Pulverpartikel durch sie hindurchdringen können. Durch die Diffusorwirkung der Filteröffnungen 3 entstehen Verwirbelungen, die zu einer feinschaumigen Crema führen, die sich nach Fertigstellung z. B. eines Espressos an dessen Oberfläche befindet. Durch die sich in Strömungsrichtung A erweiternde Form der Filteröffnungen 3 besteht außerdem keine Verstopfungsgefahr.

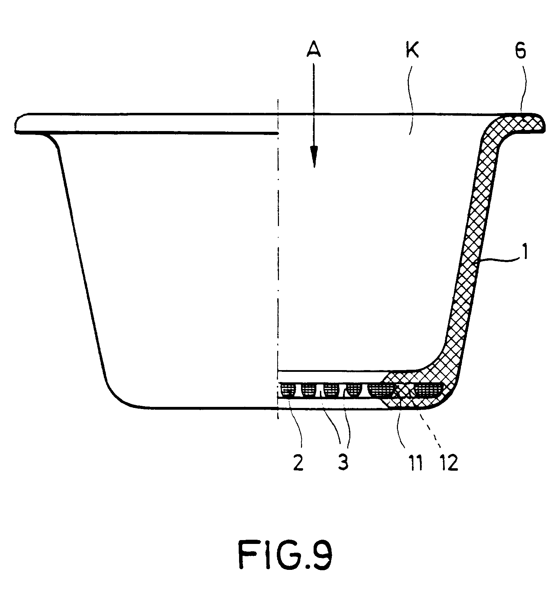

Im folgenden wird auf das zweite Ausführungsbeispiel gemäß Fig. 9 Bezug genommen. Es werden nur die Unterschiede zur erstgenannten Ausführungsform beschrieben. Für gleiche und ähnliche Bauteile werden identische Bezugsziffern verwendet.

Bei dieser Ausführungsform wird der Rahmen 4 einteilig mit dem unteren Endbereich der Topfwandung 1 aus Kunststoff hergestellt. Dabei wird die Filtergrundplatte 2 dann lediglich in einem einzigen Spritzgußvorgang mit einem Rahmen 4 und einer einteilig damit verbundenen Topfwandung 1 versehen. Bei einem Spritzgußvorgang dringt dann, wie auch im ersten Ausführungsbeispiel, Kunststoffmasse in die Halteöffnung 11 und Verankerungsöffnung 13 ein, die jeweils den Halte- und Verankerungsbereich 12, 14 formen. Der Kragen 5 und die Filtergrundplatte 2 sind dann regelrecht im Rahmen 4 der Topfwandung 1 verankert. Eine separate Fertigung der Topfwandung 1 kann bei dieser Ausführungsform entfallen.

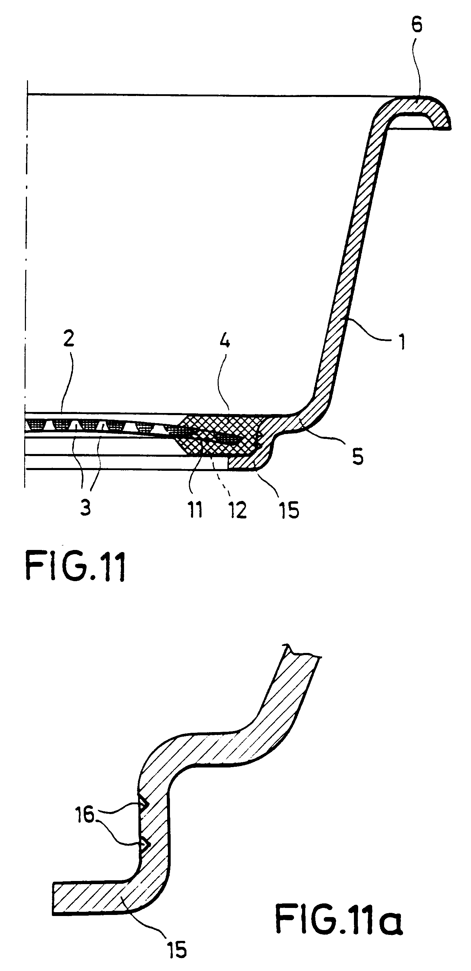

Im folgenden wird auf das vierte Ausführungsbeispiel gemäß den Figuren 11 und 11a Bezug genommen. Es werden nur die Unterschiede zur erstgenannten Ausführungsform beschrieben. Für gleiche und ähnliche Bauteile werden identische Bezugsziffern verwendet.

Der Kragen 5 dieser Ausführungsform weist eine umlaufende Stufe 15 auf, die einen Paßsitz für den Rahmen 4 bereitstellt, in den dieser im wesentlich stramm eingepaßt ist. Diese Fügetechnik bietet den Vorteil, daß das positionsrichtige Anordnen der Topfwandung 1 innerhalb einer Spritzgußform zum Verbinden von Filtergrundplatte 2 und Topfwandung 1 verzichtet werden kann. Des weiteren ist die Filtergrundplatte 2 entgegen der Strömungsrichtung A leicht konvex gewölbt im Rahmen 4 angeordnet. Das hat zur Folge, daß die Filtergrundplatte 2 eine gegenüber Druckbeaufschlagung in Strömungsrichtung A größere Stabilität aufweist. Des weiteren wird durch Druckausübung auf die Filtergrundplatte 2 der Rahmen 4 nach außen gegen den vertikalen Teil der Stufe 15 gepreßt. Hierdurch wird der Sitz des Rahmens 4 in der Stufe 15 verstärkt und eine bessere Abdichtung erreicht. Damit die Abdichtung nochmals verbessert wird, sind im vertikalen Bereich der Stufe 15 umlaufende Dichtungsrillen 16 angeordnet, in die ein Teil des Umfangsbereichs des Rahmens 4 im wesentlichen formschlüssig eingreift. Dies geschieht insbesondere bei Kunststoffrahmen 4 ganz automatisch durch den vorherrschenden Preßdruck, indem ein Teil des Kunststoffes in die Dichtungsrillen 16 gedrückt wird.

In einzelnen Figuren sind zur Vereinfachung nur ein Teil der Filteröffnungen 3 angedeutet. Es versteht sich von selbst, daß auch die übrige Fläche der Filtergrundplatte 2 von Filteröffnungen 3 durchdrungen sein kann.

## Patentansprüche

1. Topfförmiger Dauerfiltereinsatz zum Einsatz in einer Espressomaschine, mit einer im wesentlichen den Topfboden formenden Filtergrundplatte (2), die von mehreren Filteröffnungen (3) im wesentlichen in Strömungsrichtung (A) des zu filternden Mediums durchbrochen ist und einem die Filtergrundplatte umgebenden Rahmen (4) aufweist, und einer im wesentlichen am Rand der Filtergrundplatte (2) angeordneten und sich zum Bilden eines Kaffeeaufnahmebereichs (K) von dieser quer wegerstreckenden Topfwandung (1), wobei der Dauerfiltereinsatz mehrteilig ausgebildet ist, indem der untere Randbereich der Topfwandung (1) im wesentlichen am äußeren Rand der Filtergrundplatte (2) befestigt ist, **dadurch gekennzeichnet**, daß der untere Randbereich der Topfwandung (1) und die Filtergrundplatte (2) durch eine Kunststoffspritzgußverbindung miteinander verbunden sind, wobei ein Rahmen (4) durch Kunststoffspritzgießen im wesentlichen um den äußeren Rand der Filtergrundplatte (2) umlaufend angebracht ist und der Rahmen (4) die Filtergrundplatte (2) und die Topfwandung (1) miteinander verbindet.

2. Dauerfiltereinsatz nach Anspruch 1, **dadurch gekennzeichnet**, daß der untere Randbereich mindestens ein Befestigungselement zur Aufnahme im Rahmen (4) aufweist.

3. Dauerfiltereinsatz nach Anspruch 1, **dadurch gekennzeichnet**, daß das Befestigungselement in Form eines am unteren Randbereich der Topfwandung (1) umlaufenden, zur Topfachse weisenden Kragen (5) ausgebildet ist.

4. Dauerfiltereinsatz nach einem der Ansprüche 1 bis 3, **dadurch gekennzeichnet**, daß die Topfwandung (1) aus Metall, bevorzugt aus Edelstahl, besteht.

5. Dauerfiltereinsatz nach einem der Ansprüche 1 bis 4, **dadurch gekennzeichnet**, daß die Topfwandung (1) durch einen Metalldruckgußvorgang hergestellt ist und aus Metall, bevorzugt aus Aluminium oder Zink oder deren Legierungen, besteht.

6. Dauerfiltereinsatz nach einem der Ansprüche 1 bis 5, dadurch gekennzeichnet, daß die Topfwandung (1) aus Kunststoff besteht.

7. Dauerfiltereinsatz nach Anspruch 5 oder 6, **dadurch gekennzeichnet**, daß die Topfwandung (1) und der Rahmen (4) einteilig ausgebildet sind.

8. Dauerfiltereinsatz nach einem der Ansprüche 1 bis 7, **dadurch gekennzeichnet**, daß die Filteröffnungen (3) im Querschnitt eine dreieckige Form aufweisen.

9. Dauerfiltereinsatz nach Anspruch 8, **dadurch gekennzeichnet**, daß die Filteröffnungen (3) die Form eines gleichseitigen Dreiecks aufweisen.

10. Dauerfiltereinsatz nach einem der Ansprüche 1 bis 7, **dadurch gekennzeichnet**, daß die Filteröffnungen (3) im Querschnitt eine Kreisform aufweisen.

11. Dauerfiltereinsatz nach einem der Ansprüche 1 bis 7, **dadurch gekennzeichnet**, daß die Filteröffnungen (3) im wesentlichen eine Linsen- oder Tropfenform aufweisen.

12. Dauerfiltereinsatz nach einem der Ansprüche 1 bis 11, **dadurch gekennzeichnet**, daß sich die Filteröffnungen (3) von der Oberseite (8) der Filtergrundplatte (2) in Strömungsrichtung (A) zur Unterseite (7) der Filtergrundplatte (2) trichterförmig erweitern.

13. Dauerfiltereinsatz nach Anspruch 12, **dadurch gekennzeichnet**, daß der Austrittswinkel der Seitenflächen (10) der Filteröffnungen (3) an der Unterseite (7) der Filtergrundplatte (2) mindestens 90° beträgt.

14. Dauerfiltereinsatz nach einem der Ansprüche 1 bis 13, **dadurch gekennzeichnet**, daß die Seitenflächen (10) der Filteröffnungen (3) bogenförmig gekrümmt ausgebildet sind.

15. Dauerfiltereinsatz nach einem der Ansprüche 1 bis 14, **dadurch gekennzeichnet**, daß die Seitenlänge (a) der Filteröffnungen (3) an der Oberseite (8) der Filtergrundplatte (2) 50 bis 300 µm, bevorzugt ca. 200 µm, beträgt.

16. Dauerfiltereinsatz nach einem der Ansprüche 1 bis 15, **dadurch gekennzeichnet**, daß der Durchmesser der Filteröffnungen (3) an der Oberseite (8) der Filtergrundplatte (2) 100 bis 300 µm, bevorzugt 200 µm, beträgt.

17. Dauerfiltereinsatz nach einem der Ansprüche 1 bis 16, **dadurch gekennzeichnet**, daß die Filtergrundplatte (2) eine Dicke von 0,1 bis 1 mm, bevorzugt 0,4 mm, aufweist.

18. Dauerfiltereinsatz nach einem der Ansprüche 1 bis 17, **dadurch gekennzeichnet**, daß das Verhältnis der Dicke (b) der Filtergrundplatte (2) zu dem Durchmesser bzw. der Seitenlänge (a) der Filteröffnungen (3) 1,0 bis 3,0, bevorzugt 2,0, beträgt.

19. Dauerfiltereinsatz nach einem der Ansprüche 1 bis 18, **dadurch gekennzeichnet**, daß die Summe der Flächen der Filteröffnungen (3) der Filtergrundplatte (2) 3 bis 12 mm², bevorzugt 7 mm², beträgt.

20. Dauerfiltereinsatz nach einem der Ansprüche 1 bis 19, **dadurch gekennzeichnet**, daß die Filteröffnungen (3) reihen- und/oder spaltenförmig in der Filtergrundplatte (2) zueinander angeordnet sind.

21. Dauerfiltereinsatz nach Anspruch 20, **dadurch gekennzeichnet**, daß die Spitzen der dreieckigen Filteröffnungen (3) alternierend in einer Reihe und/oder Spalte jeweils in eine entgegengesetzte Richtung weisen.

22. Dauerfiltereinsatz nach einem der Ansprüche 1 bis 21, **dadurch gekennzeichnet**, daß im Randbereich der Filtergrundplatte (2) mindestens eine Halteöffnung (11) angeordnet ist, in die ein Haltebereich (12) des Rahmens (4) im wesentlichen paßgenau eingreift.

23. Dauerfiltereinsatz nach einem der Ansprüche 1 bis 22, **dadurch gekennzeichnet**, daß im inneren Randbereich des Kragens (5) mindestens eine Verankerungsöffnung (13) angeordnet ist, in die ein Verankerungsbereich (14) des Rahmens (4) im wesentlichen paßgenau eingreift.

24. Dauerfiltereinsatz nach einem der Ansprüche 1 bis 23, **dadurch gekennzeichnet**, daß die Halteöffnungen (11) der Filtergrundplatte (2) und die Verankerungsöffnungen (13) des Kragens (5) zumindest teilweise im wesentlichen zueinander fluchtend angeordnet sind.

25. Dauerfiltereinsatz nach einem der Ansprüche 1 bis 24, **dadurch gekennzeichnet**, daß die Halteöffnungen (11) der Filtergrundplatte (2) im wesentlichen innerhalb des vom inneren Randbereich des Kragens (5) umschlossenen Öffnungsbereichs angeordnet sind.

26. Dauerfiltereinsatz nach einem der Ansprüche 1 bis 25, **dadurch gekennzeichnet**, daß die Halteöffnungen (11) und/oder die Verankerungsöffnungen (13) im wesentlichen in Form eines umlaufenden Lochkranzes entsprechend in den Randbereich der Filtergrundplatte (2) und/oder inneren Randbereich des Kragens (5) eingebracht sind.

27. Dauerfiltereinsatz nach einem der Ansprüche 1 bis 26, **dadurch gekennzeichnet**, daß die Halteöffnungen (11) und/oder die Verankerungsöffnungen (13) entsprechend zum Rand der Filtergrundplatte (2) und/oder dem inneren Rand des Kragéns (5) hin zumindest teilweise offen ausgebildet sind.

28. Dauerfiltereinsatz nach einem der Ansprüche 1 bis 27, **dadurch gekennzeichnet**, daß der Rahmen (4) im wesentlichen vollständig den Kragen (5) umschließt und zumindest bereichsweise formschlüssig an der Topfwandung (1) anliegt.

29. Dauerfiltereinsatz nach einem der Ansprüche 1 bis 28, **dadurch gekennzeichnet**, daß der Kragen (5) eine umlaufende Stufe (15) aufweist, in die der Rahmen (4) zumindest teilweise im wesentlichen stramm eingepaßt ist.

30. Dauerfiltereinsatz nach einem der Ansprüche 1 bis 29, **dadurch gekennzeichnet**, daß die Filtergrundplatte (2) entgegen der Strömungsrichtung (A) leicht konvex gewölbt im Rahmen (4) angeordnet ist.

31. Dauerfiltereinsatz nach einem der Ansprüche 1 bis 30, **dadurch gekennzeichnet**, daß zumindest im vertikalen Bereich der Stufe (15) mindestens eine umlaufende Dichtungsrille (16) angeordnet ist, in die Umfangsbereiche des Rahmens (4) im wesentlichen formschlüssig eingreifen.

32. Dauerfiltereinsatz nach einem der Ansprüche 1 bis 31, **dadurch gekennzeichnet**, daß die Filtergrundplatte (2) aus Metall besteht und durch elektrolytische Metallabscheidung oder Stanzen oder Ätzen hergestellt ist.

33. Dauerfiltereinsatz nach einem der Ansprüche 1 bis 32, **dadurch gekennzeichnet**, daß der Rahmen (4) Verstärkungsstreben (9) umfaßt, die sich entlang der Unterseite (7) der Filtergrundplatte (2) erstrecken und mit dieser in Berührung stehen.

34. Dauerfiltereinsatz nach einem der Ansprüche 1 bis 32, **dadurch gekennzeichnet**, daß der Rahmen (4) Verstärkungsstreben (9) umfaßt, die sich entlang der Oberseite (8) der Filtergrundplatte (2) erstrecken und mit dieser in Berührung stehen.

35. Dauerfiltereinsatz nach einem der Ansprüche 1 bis 34, **dadurch gekennzeichnet**, daß die Filtergrundplatte (2) und der Rahmen (4) im wesentlichen eine Kreisform aufweisen.

36. Dauerfiltereinsatz nach einem der Ansprüche 1 bis 35, **dadurch gekennzeichnet**, daß die Filtergrundplatte (2) die Form eines Polygons, bevorzugt eines Sechsecks oder Achtecks, aufweist.

## Claims

1. Cup-shaped permanent filter insert for insertion into an espresso machine, with a filter base plate (2) substantially forming the cup base, which is penetrated by a plurality of filter openings (3) substantially in the flow direction (A) of the medium to be filtered, and has a frame (4) surrounding the filter base plate, and with a cup wall (1) substantially disposed at the edge of the filter base plate (2) and extending transversely away therefrom to form a coffee receiving area (K), the permanent filter insert being formed in a plurality of parts, the lower edge area of the cup wall (1) being secured substantially on the outer edge of the filter base plate (2), characterised in that the lower edge area of the cup wall (1) and the filter base plate (2) are interconnected by a plastic injection moulded connection, a frame (4) being attached by plastic injection moulding, extending substantially around the outer edge of the filter base plate (2), and the frame (4) connecting the filter base plate (2) and the cup wall (1) together.

2. Permanent filter insert according to claim 1, characterised in that the lower edge area has at least one attachment member for accommodation in the frame (4).

3. Permanent filter insert according to claim 1, characterised in that the attachment member is in the form of a collar (5), aligned towards the cup axis, and surrounding the lower edge area of the cup wall (1).

4. Permanent filter insert according to one of claims 1 to 3, characterised in that the cup wall (1) consists of metal, preferably of stainless steel.

5. Permanent filter insert according to one of claims 1 to 4, characterised in that the cup wall (1) is made by a metal pressure casting procedure, and consists of metal, preferably of aluminium or zinc or their alloys.

6. Permanent filter insert according to one of claims 1 to 5, characterised in that the cup wall (1) consists of plastics.

7. Permanent filter insert according to claim 5 or 6, characterised in that the cup wall (1) and the frame (4) are formed as one part.

8. Permanent filter insert according to one of claims 1 to 7, characterised in that the filter openings (3) have a triangular cross-sectional shape.

9. Permanent filter insert according to claim 8, characterised in that the filter openings (3) have the shape of an equilateral triangle.

10. Permanent filter insert according to one of claims 1 to 7, characterised in that the filter openings (3) have a circular cross-sectional shape.

11. Permanent filter insert according to one of claims 1 to 7, characterised in that the filter openings (3) have substantially a lens or drop shape.

12. Permanent filter insert according to one of claims 1 to 11, characterised in that the filter openings (3) widen from the upper side (8) of the filter base (2) in the flow direction (A) to the underside (7) of the filter base plate (2).

13. Permanent filter insert according to claim 12, characterised in that the angle of emergence of the side surfaces (10) of the filter openings (3) at the underside (7) of the filter base plate (2) comes to at least 90°.

14. Permanent filter insert according to one of claims 1 to 13, characterised in that the side surfaces (10) of the filter openings (3) are curved in an arcuate manner.

15. Permanent filter insert according to one of claims 1 to 14, characterised in that the side length (a) of the filter openings (3) at the upper side (8) of the filter base plate (2) comes to 50 to 300 µm, preferably about 200 µm.

16. Permanent filter insert according to one of claims 1 to 15, characterised in that the diameter of the filter openings (3) at the upper side (8) of the filter base plate (2) comes to 100 to 300 µm, preferably 200 µm.

17. Permanent filter insert according to one of claims 1 to 16, characterised in that the filter base plate (2) has a thickness of 0.1 to 1 mm, preferably 0.4 mm.

18. Permanent filter insert according to one of claims 1 to 17, characterised in that the ratio of the thickness (b) of the filter base plate (2) to the diameter or the side length (a) of the filter openings (3) comes to 1.0 to 3.0, preferably 2.0.

19. Permanent filter insert according to one of claims 1 to 18, characterised in that the sum of the areas of the filter openings (3) of the filter base plate (2) comes to 3 to 12 mm², preferably 7 mm².

20. Permanent filter insert according to one of claims 1 to 19, characterised in that the filter openings (3) are located relative to one another in the filter base plate (2) in a row alignment and/or column configuration.

21. Permanent filter insert according to claim 20, characterised in that the points of the triangular filter openings (3) are each aligned in an opposite direction alternately in a row and/or column.

22. Permanent filter insert according to one of claims 1 to 21, characterised in that, in the edge area of the filter base plate (2) there is located at least one retainer opening (11), into which a retaining area (12) of the frame (4) engages in a substantially close-fitting manner.

23. Permanent filter insert according to one of claims 1 to 22, characterised in that, in the inner edge area of the collar (5) there is located at least one anchorage opening (13), into which an anchorage area (14) of the frame engages in a substantially close-fitting manner.

24. Permanent filter insert according to one of claims 1 to 23, characterised in that the retainer openings (11) of the filter base plate (2) and the anchoring openings (13) of the collar (5) are located at least partly substantially flush with one another.

25. Permanent filter insert according to one of claims 1 to 24, characterised in that the retainer openings (11) of the filter base plate (2) are disposed substantially inside the opening area enclosed by the inner edge area of the collar (5).

26. Permanent filter insert according to one of claims 1 to 25, characterised in that the retainer openings (11) and/or the anchoring openings (13) are inserted substantially in the form of a surrounding perforated ring, appropriately into the edge area of the filter base plate (2) and/or inner edge area of the collar (5).

27. Permanent filter insert according to one of claims 1 to 26, characterised in that the retaining openings (11) and/or the anchorage openings (13) are formed to be at least partly open in accordance with the edge of the filter base plate (2) and/or the inner edge of the collar (5).

28. Permanent filter insert according to one of claims 1 to 27, characterised in that the frame (4) substantially completely surrounds the collar (5) and abuts at least in areas in a positive-locking manner onto the cup wall (1).

29. Permanent filter insert according to one of claims 1 to 28, characterised in that the collar (5) has a surrounding step (15), into which the frame (4) is fitted at least partly substantially tightly.

30. Permanent filter insert according to one of claims 1 to 29, characterised in that the filter base plate (2) is located in the frame (4) to be slightly curved in a convex manner contrary to the flow direction (A).

31. Permanent filter insert according to one of claims 1 to 30, characterised in that, at least in the vertical area of the step (15), there is located at least one surrounding seal groove (16), into which peripheral areas of the frame (4) engage substantially form-lockingly.

32. Permanent filter insert according to one of claims 1 to 31, characterised in that the filter base plate (2) consists of metal and is produced by electrolytic metal deposition or stamping or etching.

33. Permanent filter insert according to one of claims 1 to 32, characterised in that the frame (4) comprises reinforcement struts (9) which extend along the underside (7) of the filter base plate (2) and remain in contact therewith.

34. Permanent filter insert according to one of claims 1 to 32, characterised in that the frame (4) comprises reinforcement struts (9), which extend along the upper side (8) of the filter base plate (2) and remain in contact therewith.

35. Permanent filter insert according to one of claims 1 to 34, characterised in that the filter base plate (2) and the frame (4) are substantially circular in shape.

36. Permanent filter insert according to one of claims 1 to 35, characterised in that the filter base plate (2) has the form of a polygon, preferably of a hexagon or of an octagon.

## Revendications

1. Cartouche filtrante durable en forme de pot pour être utilisée dans un percolateur pour café expresso, comprenant une plaque de fond de filtration (2) formant essentiellement le fond du pot, laquelle plaque de fond est traversée par plusieurs ouvertures de filtration (3), placées essentiellement dans le sens de l'écoulement (A) du milieu à filtrer et comprenant un cadre (4) entourant la plaque du fond de filtration, et comprenant une paroi (1) du pot, disposée pratiquement au bord de la plaque du fond de filtration (2) et s'étendant transversalement par rapport à ladite plaque du fond de filtration pour constituer une zone (K) de réception du café, où cartouche filtrante durable est constituée de plusieurs parties, tandis que la zone du bord inférieur de la paroi (1) du pot est fixée essentiellement sur le bord extérieur de la plaque du fond de filtration (2), caractérisé en ce que la zone du bord inférieur de la paroi (1) du pot et la plaque du fond de filtration (2) sont reliées entre elles par une pièce de jonction en matière plastique moulée par injection, où un cadre (4) en matière plastique moulée par injection est placé, de façon circulaire, essentiellement autour du bord extérieur de la plaque du fond de filtration (2), et en ce que le cadre (4) relie entre elles la plaque du fond de filtration (2) et la paroi (1) du pot.

2. Cartouche filtrante durable selon la revendication 1, caractérisée en ce que la zone du bord inférieur comprend au moins un élément de fixation pour être logé dans le cadre (4).

3. Cartouche filtrante durable selon la revendication 1, caractérisée en ce que l'élément de fixation est constitué sous la forme d'une collerette (5) entourant la zone du bord inférieur de la paroi (1) du pot et se présentant dans l'axe du pot.

4. Cartouche filtrante durable selon l'une quelconque des revendications 1 à 3, caractérisée en ce que la paroi (1) du pot est en métal, étant fabriquée de préférence dans un métal noble.

5. Cartouche filtrante durable selon l'une quelconque des revendications 1 à 4, caractérisée en ce que la paroi (1) du pot est fabriquée par un processus de coulée sous pression du métal et en ce que ladite paroi du pot est en métal, étant de préférence en aluminium ou en zinc ou fabriquée avec des alliages de ces métaux.

6. Cartouche filtrante durable selon l'une quelconque des revendications 1 à 5, caractérisée en ce que la paroi (1) du pot est en matière plastique.

7. Cartouche filtrante durable selon la revendication 5 ou 6, caractérisée en ce que la paroi (1) du pot et le cadre (4) sont constitués en formant une seule pièce.

8. Cartouche filtrante durable selon l'une quelconque des revendications 1 à 7, caractérisée en ce que les ouvertures de filtration (3) ont en coupe transversale une forme triangulaire.

9. Cartouche filtrante durable selon la revendication 8, caractérisée en ce que les ouvertures de filtration (3) ont la forme d'un triangle équilatéral.

10. Cartouche filtrante durable selon l'une quelconque des revendications 1 à 7, caractérisée en ce que les ouvertures de filtration (3) ont en coupe transversale une forme circulaire.

11. Cartouche filtrante durable selon l'une quelconque des revendications 1 à 7, caractérisée en ce que les ouvertures de filtration (3) ont essentiellement la forme d'une lentille ou d'une goutte.

12. Cartouche filtrante durable selon l'une quelconque des revendications 1 à 11, caractérisée en ce que les ouvertures de filtration (3) s'étendent en forme d'entonnoir depuis la face supérieure (8) de la plaque du fond de filtration (2), dans le sens de l'écoulement (A), jusqu'à la face inférieure (7) de la plaque du fond de filtration (2).

13. Cartouche filtrante durable selon la revendication 12, caractérisé en ce que l'angle de sortie des surfaces latérales (10) des ouvertures de filtration (3), au niveau de la face inférieure (7) de la plaque du fond de filtration (2), est au moins de 90°.

14. Cartouche filtrante durable selon l'une quelconque des revendications 1 à 13, caractérisé en ce que les surfaces latérales (10) des ouvertures de filtration (3) sont constituées en étant courbées en forme d'arc.

15. Cartouche filtrante durable selon l'une quelconque des revendications 1 à 14, caractérisé en ce que la longueur latérale (a) des ouvertures de filtration (3), au niveau de la face supérieure (8) de la plaque du fond de filtration (2), est comprise entre 50 µm et 300 µm, étant de préférence de 200 µm environ.

16. Cartouche filtrante durable selon l'une quelconque des revendications 1 à 15, caractérisée en ce que le diamètre des ouvertures de filtration (3), au niveau de la face supérieure (8) dé la plaque du fond de filtration (2), est compris entre 100 µm et 300 µm, étant de préférence de 200 µm.

17. Cartouche filtrante durable selon l'une quelconque des revendications 1 à 16, caractérisée en ce que la plaque du fond de filtration (2) a une épaisseur comprise entre 0,1 mm et 1 mm, étant de préférence de 0,4 mm.

18. Cartouche filtrante durable selon l'une quelconque des revendications 1 à 17, caractérisée en ce que le rapport de l'épaisseur (b) de la plaque du fond de filtration (2), sur le diamètre ou la longueur latérale (a) des ouvertures de filtration (3), est compris entre 1,0 et 3,0, étant de préférence de 2,0.

19. Cartouche filtrante durable selon l'une quelconque des revendications 1 à 18, caractérisée en ce que la somme des surfaces des ouvertures de filtration (3) de la plaque du fond de filtration (2) est comprise entre 3 mm² et 12 mm², étant de préférence de 7 mm².

20. Cartouche filtrante durable selon l'une quelconque des revendications 1 à 19, caractérisée en ce que les ouvertures de filtration (3) sont disposées, l'une par rapport à l'autre, en forme de rangées et/ou en forme de fentes dans la plaque du fond de filtration (2).

21. Cartouche filtrante durable selon la revendication 20, caractérisée en ce que les pointes des ouvertures de filtration (3) triangulaires se présentent de façon alternée en formant une rangée et/ou une fente disposée à chaque fois suivant une direction opposée.

22. Cartouche filtrante durable selon l'une quelconque des revendications 1 à 21, caractérisée en ce que au moins une ouverture de retenue (11) est disposée dans la zone du bord de la plaque du fond de filtration (2), ouverture de retenue dans laquelle s'engage une zone de retenue (12) du cadre (4) essentiellement de façon bien ajustée.

23. Cartouche filtrante durable selon l'une quelconque des revendications 1 à 22, caractérisée en ce que au moins une ouverture d'ancrage (13) est disposée dans la zone du bord intérieur de la collerette (5), ouverture d'ancrage dans laquelle s'engage une zone d'ancrage (14) du cadre (4) essentiellement de façon bien ajustée.

24. Cartouche filtrante durable selon l'une quelconque des revendications 1 à 23, caractérisée en ce que les ouvertures de retenue (11) de la plaque du fond de filtration (2) et les ouvertures d'ancrage (13) de la collerette (5) sont disposées au moins partiellement en étant pratiquement alignées les unes par rapport aux autres.

25. Cartouche filtrante durable selon l'une quelconque des revendications 1 à 24, caractérisée en ce que les ouvertures de retenue (11) de la plaque du fond de filtration (2) sont disposées essentiellement à l'intérieur de la zone d'ouverture entourée par la zone du bord intérieur de la collerette (5).

26. Cartouche filtrante durable selon l'une quelconque des revendications 1 à 25, caractérisée en ce que les ouvertures de retenue (11) et/ou les ouvertures d'ancrage (13) sont introduites de façon adaptée, pratiquement sous la forme d'une couronne circulaire de lumières, dans la zone du bord de la plaque du fond de filtration (2) et/ou dans la zone du bord intérieur de la collerette (5).

27. Cartouche filtrante durable selon l'une quelconque des revendications 1 à 26, caractérisée en ce que les ouvertures de retenue (11) et/ou les ouvertures d'ancrage (13) sont constituées de façon adaptée en étant partiellement ouvertes en direction du bord de la plaque du fond de filtration (2) et/ou du bord intérieur de la collerette (5).

28. Cartouche filtrante durable selon l'une quelconque des revendications 1 à 27, caractérisée en ce que le cadre (4) entoure pratiquement complètement la collerette (5) et en ce que, au moins par zones, ledit cadre vient en appui par sûreté de forme sur la paroi (1) du pot.

29. Cartouche filtrante durable selon l'une quelconque des revendications 1 à 28, caractérisée en ce que la collerette (5) présente une marche circulaire (15) dans laquelle le cadre (4) est introduit au moins partiellement de façon pratiquement serrée.

30. Cartouche filtrante durable selon l'une quelconque des revendications 1 à 29, caractérisé en ce que la plaque du fond de filtration (2), opposée au sens d'écoulement (A), est disposée dans le cadre (4) en étant bombée de façon légèrement convexe.

31. Cartouche filtrante durable selon l'une quelconque des revendications 1 à 30, caractérisée en ce que au moins une gorge d'étanchéité (16) circulaire est disposée au moins dans la zone verticale de la marche (15), gorge d'étanchéité dans laquelle s'engagent, essentiellement par sûreté de forme, les zones périphériques du cadre (4).

32. Cartouche filtrante durable selon l'une quelconque des revendications 1 à 31, caractérisée en ce que la plaque du fond de filtration (2) est en métal et en ce que ladite plaque est fabriquée par dépôt électrolytique du métal ou par découpe à la presse ou par décapage.

33. Cartouche filtrante durable selon l'une quelconque des revendications 1 à 32, caractérisée en ce que le cadre (4) entoure des renforts (9) qui s'étendent le long de la face inférieure (7) de la plaque du fond de filtration (2) et qui sont en contact avec ladite plaque.

34. Cartouche filtrante durable selon l'une quelconque des revendications 1 à 32, caractérisée en ce que le cadre (4) entoure des renforts (9) qui s'étendent le long de la face supérieure (8) de la plaque du fond de filtration (2) et qui sont en contact avec ladite plaque.

35. Cartouche filtrante durable selon l'une quelconque des revendications 1 à 34, caractérisée en ce que la plaque du fond de filtration (2) et le cadre (4) ont pratiquement une forme circulaire.

36. Cartouche filtrante durable selon l'une quelconque des revendications 1 à 35, caractérisée en ce que la plaque du fond de filtration (2) a la forme d'un polygone, de préférence d'un hexagone ou d'un octogone.
